# FASCICULE DE BREVET EUROPEEN

(11) **EP 2 691 273 B1**
(45) Date de publication et mention de la délivrance du brevet: **15.04.2020**
(21) Numéro de dépôt: 12710292.9
(22) Date de dépôt: 26.03.2012
(51) Int. Cl.: B60S 1/52, B60S 1/38

(54) **EMBOUT D'EXTREMITE POUR BALAI D'ESSUYAGE**
ENDSTÜCK FÜR EINEN SCHEIBENWISCHER
END PIECE FOR A WINDSHIELD WIPER

(30) Priorité: 31.03.2011 FR 1152712
(43) Date de publication de la demande: 05.02.2014
(73) Titulaire: Valeo Systèmes d'Essuyage, 78322 Le Mesnil Saint Denis (FR)
(72) Inventeur: ESPINASSE, Philippe, F-63114 Coudes (FR)
(74) Mandataire: Valeo Systèmes d'Essuyage
(86) Numéro de dépôt international: PCT/EP2012/055328
(87) Numéro de publication internationale: WO 2012/130802

(56) Documents cités:
- EP-A2- 2 123 524
- FR-A1- 2 920 729
- US-A1- 2006 112 511
- US-A1- 2008 016 643
- US-A1- 2010 071 148
- US-A1- 2010 319 154

## Description

Le domaine de la présente invention est celui des équipements pour l'essuyage des vitrages, notamment d'une automobile.

Les automobiles sont couramment équipées de systèmes d'essuie-glace pour assurer un nettoyage et/ou lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur. Dans les deux solutions, le balai est rattaché au bras tournant de l'essuie-glace par un connecteur.

Dans le cas où la qualité de l'essuyage se dégrade, il devient alors nécessaire de renouveler le moyen d'essuyage. Il existe deux solutions : la première consiste en un remplacement de l'intégralité du balai par un balai neuf alors que la deuxième solution consiste en un remplacement de la lame racleuse tout en conservant le reste du balai.

L'invention concerne plus particulièrement cette seconde solution qui impose le démontage d'une extrémité du balai pour accéder à la lame racleuse. La demande US 2010/0071148 A1 divulgue de démonter ainsi un embout d'extrémité du balai.

Pour réaliser la fixation de la lame racleuse avec le support constitutif du balai, ce dernier comporte un embout qui est monté à une extrémité de ce support et qui comprend des moyens pour assurer sa solidarisation vis-à-vis du support.

Par ailleurs, les essuie-glaces sont également équipés de dispositifs d'amenée d'un liquide lave-vitre qui est acheminé depuis un réservoir situé sur le véhicule et qui est pulvérisé en direction du pare-brise par des buses situées soit autour du pare-brise, soit sur l'essuie-glace lui-même pour une meilleure distribution du liquide.

L'inconvénient de cette seconde situation, dans le cas où seule la lame racleuse est remplacée, réside dans le fait que le dispositif d'amenée de liquide se trouve ouvert et provoque ainsi une fuite. Par ailleurs, l'ouverture du dispositif d'amenée de liquide pendant la phase de remplacement de la lame génère un risque de voir des impuretés entrer dans le dispositif. Une telle situation est problématique car ces impuretés obstruent les buses, dégradant ainsi nettement l'efficacité du lavage de pare-brise.

Un autre inconvénient d'une telle situation réside dans la difficulté de remplacer une telle lame racleuse. En effet, il convient de disposer de la solution la plus ergonomique possible pour remplacer la lame. On comprend ainsi que la présence d'un liquide au niveau de la zone de manipulation complique le remplacement de la lame et le bon remontage de celle-ci. Par ailleurs, la pression résiduelle à l'intérieur du dispositif d'amenée de liquide peut provoquer des projections de liquide sur l'utilisateur qu'il convient d'éviter. En outre, il convient de faciliter le déblocage et le blocage de la lame racleuse par rapport au reste du balai.

Le but de la présente invention est donc de résoudre les inconvénients décrits ci-dessus principalement en proposant un embout d'extrémité constitué de deux parties distinctes et reliées l'une à l'autre de manière amovible, où le démontage et le remontage de la lame sont opérés de manière simple, ergonomique et sans nécessiter l'ouverture de la ou des canalisations de liquide lave-glace présentes sur le balai d'essuyage.

L'invention a donc pour objet un embout d'extrémité d'un balai d'essuyage comportant au moins une vertèbre, l'extrémité de la vertèbre comprenant un orifice traversant de part en part ladite vertèbre, et une lame d'essuyage, l'embout comprenant une partie primaire et une partie secondaire, la partie primaire comprenant un logement apte à recevoir la vertèbre et un évidement apte à recevoir la lame d'essuyage, ladite partie primaire comprenant en outre un trou qui débouche dans le logement et dans l'évidement, ladite partie secondaire comprend un moyen de verrouillage apte à bloquer l'embout par rapport au balai, ledit moyen de verrouillage s'étendant dans le trou, la partie primaire et la partie secondaire étant reliées par un moyen de fixation amovible.

La partie primaire et la partie secondaire sont deux pièces distinctes qui sont assemblées l'une à l'autre par le moyen de fixation, ce dernier étant amovible en ce sens que la liaison ou la séparation de la partie secondaire par rapport à la partie primaire peut être opérée à plusieurs reprises sans destruction de l'embout.

Selon l'invention, le logement et l'évidement sont distincts.

Selon l'invention, la partie primaire est formée par un corps traversé par le trou et à la périphérie duquel est réalisé le moyen de fixation. On comprend ici que le moyen de fixation amovible est installé latéralement par rapport au corps.

Selon l'invention, le corps présente une face supérieure délimitant le logement, une paroi intermédiaire qui délimite à la fois le logement et l'évidement, et dans lequel le trou est pratiqué dans la face supérieure et dans la paroi intermédiaire.

Selon une caractéristique de l'invention, la partie secondaire couvre la partie primaire quand le balai d'essuyage est placé dans un plan horizontal.

Selon encore une autre caractéristique de l'invention, le moyen de fixation est réalisé par coopération de formes entre la partie primaire et la partie secondaire.

Dans une telle situation, le moyen de fixation comprend au moins une portion cylindrique mâle constitutive de la partie primaire et une portion cylindrique femelle ménagée sur la partie secondaire.

Selon un exemple de réalisation, la portion cylindrique mâle est formée par un tube présentant une paroi périphérique qui s'étend périphériquement à 360° alors que la portion cylindrique femelle est formée par un arc de cercle qui s'étend périphériquement entre 181° et 270°. On comprend que l'arc de cercle est creux, cette portion creuse étant de dimensions adaptées aux dimensions du tube.

Avantageusement, le moyen de verrouillage est agencé par rapport à la partie primaire de manière à bloquer un mouvement de translation entre cette dernière et la vertèbre.

Avantageusement encore, le moyen de verrouillage est agencé par rapport à la partie primaire de manière à bloquer un mouvement de translation entre cette dernière et la lame.

Selon un exemple de réalisation, le moyen de verrouillage est issu de matière avec la partie secondaire et forme une excroissance qui s'étend dans un volume interne de la partie secondaire, ledit volume étant délimité par une paroi constitutive de la partie secondaire. Une telle paroi prend naissance sur le moyen de verrouillage et s'étend entre deux arcs de cercle.

L'excroissance présente une section en « H » ou en « U ».

Selon une première caractéristique de l'invention, une extrémité libre de l'excroissance comprend au moins une dent apte à déformer la lame. De manière plus précise, l'extrémité libre de l'excroissance comprend une pluralité de dents, par exemple alignées entre elles.

Selon une deuxième caractéristique de l'invention, l'embout selon l'invention comprend un moyen d'obturation apte à boucher un dispositif de canalisation d'un liquide constitutif du balai.

L'invention couvre également un balai d'essuyage comprenant au moins une vertèbre, une lame d'essuyage et un embout d'extrémité selon l'une quelconque des caractéristiques décrites ci-dessus.

Un tel balai peut comprendre en outre au moins un dispositif de canalisation d'un liquide.

Un tout premier avantage selon l'invention réside dans le fait qu'un remplacement de la lame est particulièrement simple à effectuer puisqu'une seule et unique opération suffit pour libérer ou bloquer la lame racleuse par rapport au reste du balai. Une telle opération ne nécessite pas l'appui préalable sur un bouton, ou l'extraction d'une pièce intermédiaire, par exemple.

Un autre avantage réside dans le fait que la partie secondaire qui relie la lame à la partie primaire peut-être extraite sans la présence de liquide susceptible de compliquer cette extraction. Par ailleurs, le remplacement de la lame est effectué en milieu sec, ce qui évite toute projection de liquide sur l'utilisateur au moment du montage et du démontage de la lame.

Comme la partie primaire reste sur le balai d'essuyage, le dispositif d'amenée de liquide lave-vitre n'est pas ouvert, ce qui par conséquent empêche l'introduction d'impuretés dans les canalisations.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'une première variante d'un embout selon l'invention installé à l'extrémité d'un balai d'essuyage,
- la figure 2 est une vue en perspective de la lame du balai d'essuyage utilisée dans la première variante de l'invention,
- la figure 3 est une vue en perspective de la vertèbre du balai d'essuyage utilisée dans la première variante de l'invention,
- la figure 4 est une vue de côté du balai d'essuyage sur lequel est monté la partie primaire de l'embout selon la première variante de l'invention,
- la figure 5 est une vue en perspective qui montre en détails la partie primaire selon la première variante de l'invention,
- la figure 6 est une vue de dessus de la partie primaire illustrée sur la figure 5,
- la figure 7 est une vue en perspective et au dessus de la partie secondaire utilisée dans la première variante de l'embout selon l'invention,
- la figure 8 est une vue en perspective et en dessous de la partie secondaire utilisée dans la première variante de l'embout selon l'invention,
- la figure 9 est une vue de côté de la partie secondaire illustrée en figures 7 et 8,
- la figure 10 est une vue en coupe transversale de l'embout selon la première variante tel qu'installé sur un balai d'essuyage,
- la figure 11 est une vue en coupe longitudinale de l'embout selon la première variante tel qu'installé sur un balai d'essuyage,
- la figure 12 est une vue en perspective d'un deuxième mode de réalisation de la vertèbre du balai d'essuyage utilisée dans une deuxième variante de l'invention,
- la figure 13 est une vue en perspective et en dessous de la partie secondaire utilisée dans la deuxième variante de l'embout selon l'invention,
- la figure 14 est une vue en coupe transversale de l'embout selon la deuxième variante tel qu'installé sur un balai d'essuyage,
- la figure 15 est une vue en perspective de la lame du balai d'essuyage utilisée dans une troisième variante de l'embout selon l'invention,
- la figure 16 est une vue en perspective et en dessous de la partie secondaire utilisée dans la troisième variante de l'embout selon l'invention,
- la figure 17 est une vue en coupe transversale de l'embout selon la troisième variante tel qu'installé sur un balai d'essuyage,
- la figure 18 est une vue en perspective et en dessous de la partie secondaire utilisée dans une quatrième variante de l'embout selon l'invention,
- la figure 19 est une vue en coupe longitudinale de l'embout selon la quatrième variante tel qu'installé sur un balai d'essuyage.

Il faut noter que les figures exposent l'invention de manière détaillée pour mettre en oeuvre l'invention, lesdites figures pouvant bien entendu servir à mieux définir l'invention le cas échéant.

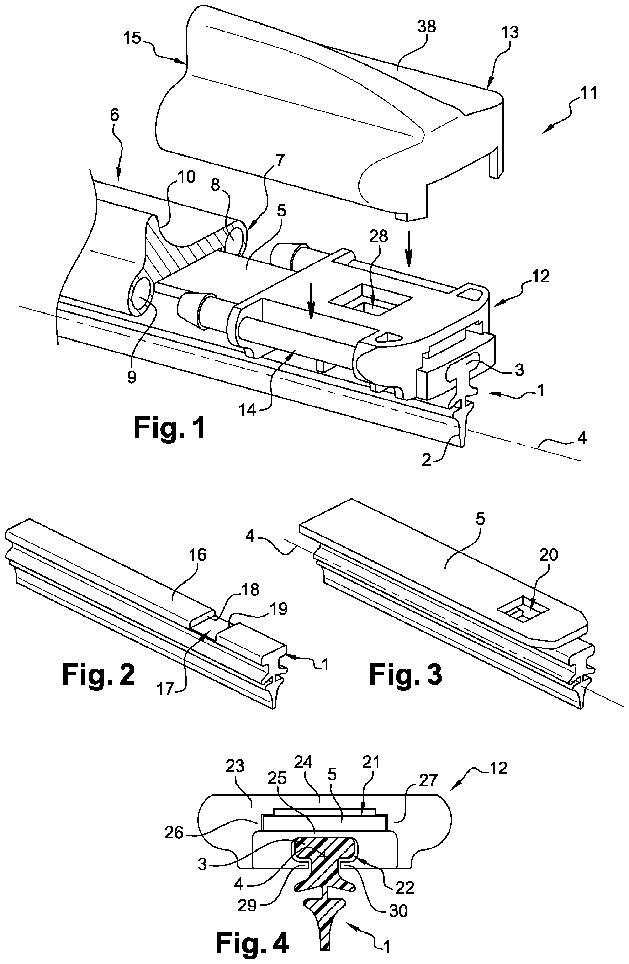

La figure 1 montre de manière partielle un balai d'essuyage équipant un système d'essuyage monté sur un véhicule automobile. Ce balai est installé sur le pare-brise avant mais il peut également être monté sur la vitre arrière du véhicule.

Le balai comprend une lame d'essuyage 1, autrement appelée lame racleuse, constituée d'une zone de frottement 2 sur le vitrage et un talon 3, qui assure la liaison mécanique avec un support constitutif du balai. Cette lame d'essuyage 1 s'étend sur la longueur selon un axe longitudinal 4.

Le balai comprend par ailleurs une vertèbre 5 qui forme un dispositif de rigidification du balai. A titre d'exemple, il s'agit d'une baguette métallique unique qui s'étend selon l'axe longitudinal 4, définissant ainsi sa longueur, et qui présente au repos une courbure convexe par rapport au pare-brise. Cette baguette présente une flexibilité déterminée, qui en se déformant quand le balai est appliqué sur le pare-brise, provoque un effort réparti sur le long de la lame d'essuyage 1.

La lame 1 et la vertèbre 5 sont retenues par le support 6 qui forme alors une monture de support longitudinal couvrant et retenant la vertèbre 5 et la lame d'essuyage 1.

Le balai d'essuyage est pourvu d'un dispositif de canalisation d'un liquide 7 qui est rendu solidaire du support 6, par exemple par clippage, collage ou plus généralement par coopération de formes. Le dispositif de canalisation de liquide 7 peut également être réalisé de manière unitaire avec le support 6, comme cela est le cas de la figure 1. Le dispositif de canalisation du liquide 7 se présente notamment sous la forme d'au moins deux conduits 8 et 9 qui s'étendent longitudinalement le long du balai selon un axe par exemple parallèle à l'axe longitudinal 4, et de part et d'autre de la lame d'essuyage 1. Plus précisément, ces conduits 8 et 9 sont disposés sur les côtés du support 6 et dans le prolongement du plan dans lequel s'étend le support 6. Ce dispositif de canalisation de liquide 7 est fabriqué à partir d'un matériau flexible, par exemple un caoutchouc ou un élastomère.

Le dispositif de canalisation du liquide 7 peut être formé conjointement avec un déflecteur d'air 10 dont la fonction est d'augmenter la force d'appui du balai sur le pare-brise au bénéfice de l'effet aérodynamique de l'air. Dans cet exemple de réalisation, le déflecteur d'air 10 et le dispositif de canalisation de liquide 7, particulièrement les deux conduits 8 et 9, sont moulés à partir d'un même matériau flexible tel qu'un caoutchouc ou un élastomère. Le déflecteur d'air 10 et le dispositif de canalisation de liquide 7 forment ainsi une seule et unique pièce.

A l'extrémité du balai est installé un embout d'extrémité 11. D'une manière générale, cet embout d'extrémité 11 assure une multiplicité de fonctions :
- il obstrue le dispositif de canalisation de liquide 7 du balai d'essuyage,
- il autorise le montage et le démontage de la lame d'essuyage 1 et de la vertèbre 5 par rapport au support 6,
- il assure la solidarisation de la lame d'essuyage 1 et de la vertèbre 5 vis-à-vis du support 6. Par solidarisation, il faut ici comprendre un moyen de bloquer la translation de la lame d'essuyage 1 au regard du support 6. Ainsi, une fois que l'embout d'extrémité 11 est en place, tout mouvement de translation de la lame d'essuyage 1 est interdit, ce qui garantit une parfaite fixation de cette dernière par rapport au reste du balai.

L'embout d'extrémité 11 comprend une partie primaire 12 et une partie secondaire 13 reliées mécaniquement l'une à l'autre par un moyen de fixation, ou de solidarisation, amovible 14. La partie secondaire 13 présente une section globalement complémentaire à la section du support 6, du dispositif de canalisation 7 et du déflecteur 10. Ainsi, ces trois composants pénètrent dans un volume interne 15 pratiqué dans la partie secondaire 13, cette dernière comprenant une paroi périphérique 38 qui suit le profil des éléments cités ci-dessus.

La partie primaire 12 présente une fonction de retenue de la lame d'essuyage 1, une fonction de retenue de la vertèbre 5 et une fonction d'obturation du dispositif de canalisation de liquide 7 alors que la partie secondaire assure un verrouillage de ces composants, c'est-à-dire le bon positionnement par rapport à l'embout d'extrémité 11 selon l'axe longitudinal 4 de la lame d'essuyage 1 et de la vertèbre 5.

La figure 2 montre une spécificité de la lame d'essuyage 1 en rapport avec la première variante de réalisation de l'embout d'extrémité 11. Le talon 3 est délimité par une paroi supérieure 16 et on constate que cette paroi supérieure présente une découpe 17 qui s'étend sur toute la largeur du talon 3 et sur une longueur déterminée. Une telle découpe 17 coopère avec un moyen de verrouillage constitutif de l'embout d'extrémité 1. La découpe 17 forme des bords latéraux 18 et 19 contre lesquels le moyen de verrouillage bute, ce qui permet d'interdire un mouvement de translation entre l'embout d'extrémité 11 et la lame d'essuyage 1.

La figure 3 illustre l'extrémité de la vertèbre 5 telle qu'utilisée dans le cadre de la première variante de réalisation de l'embout d'extrémité 11. Cette extrémité de vertèbre comprend un orifice 20 traversant de part en part la vertèbre 5. Un tel orifice 20 est réalisé au centre de la vertèbre 5 selon un axe transversal perpendiculaire à l'axe longitudinal 4.

La figure 4 montre la partie primaire 12, la vertèbre 5 et la lame d'essuyage 1 vues de côté au niveau de l'extrémité du balai. La partie primaire 12 comprenant un logement 21 apte à recevoir la vertèbre 5 et un évidement 22 apte à recevoir la lame d'essuyage 1.

Le logement 21 est formé dans un corps 23 constitutif de la partie primaire 12. Ce logement 21 correspond à un enlèvement de matière de forme rectangulaire et qui s'étend selon l'axe longitudinal 4. La forme de ce logement 21 est complémentaire d'une section transversale de la vertèbre 5. Ce logement 21 est ainsi délimité d'un côté par une face supérieure 24 constitutive du corps 23, et de l'autre par une paroi intermédiaire 25. Latéralement, ce logement 21 est bordé par deux flancs référencés 26 et 27.

L'évidement 22 reçoit le talon 3 de la lame d'essuyage 1. Cet évidement 22 s'étend longitudinalement dans le corps 23 à l'opposé du logement 21 par rapport à la paroi intermédiaire 25. On comprend que celle-ci délimite à la fois le logement 21 et l'évidement 22. Le corps comprend encore une saignée alignée avec l'évidement 22 et qui ouvre ce dernier vers le milieu environnant la partie primaire 12. Une telle saignée, de largeur inférieure à la largeur de l'évidement 22 mesurée selon l'axe transversal perpendiculaire à l'axe longitudinal 4, autorise le passage d'une portion du talon 3. Cette saignée est bordée par une première tranche 29 et une seconde tranche 30.

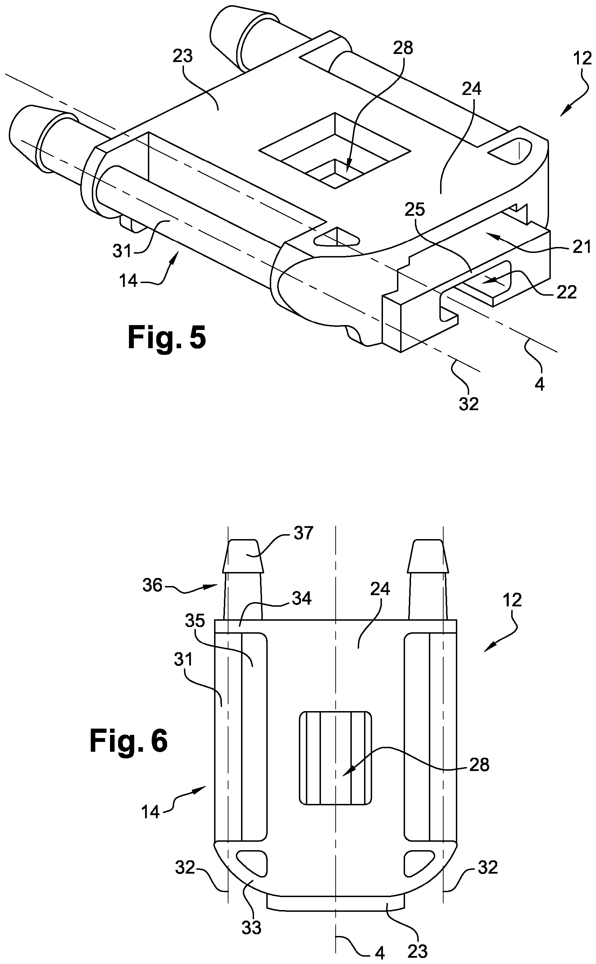

Les figures 5 et 6 montrent la partie primaire 12. Cette dernière comprend un trou 28 qui débouche dans le logement 21 et dans l'évidement 22. En pratique, le trou 28 traverse la paroi intermédiaire 25 et met ainsi en relation le volume délimité par le logement 21 et le volume délimité par l'évidement 22. En dehors de ce trou 28 qui s'étend dans un axe orthogonal à un plan qui passe par la face supérieure 24, le logement 21 est distinct, c'est-à-dire séparé, de l'évidement 22.

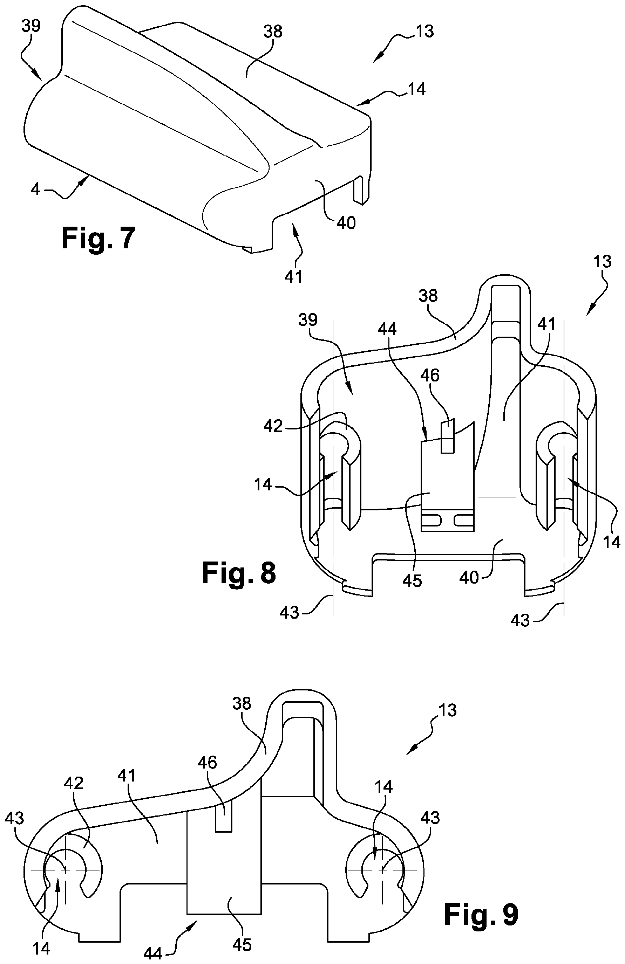

La surface de ce trou 28 réalisée dans la face supérieure 24 et dans la paroi intermédiaire 25 est équivalente la section du moyen de verrouillage qui sera décrit aux figures 8 à 11.

Les figures 5 et 6 montrent également la constitution du moyen de fixation amovible 14 qui permet de relier mécaniquement la partie secondaire 13 sur la partie primaire 12.

Sur la partie primaire 12, le moyen de fixation amovible 14 comprend une portion cylindrique mâle 31 qui s'étend, notamment, dans une direction qui s'inscrit dans un plan parallèle au plan de la face supérieure 24. De manière plus précise, cette direction de la portion cylindrique mâle, qui porte la référence 32, est parallèle à l'axe longitudinal 4.

Selon un exemple de réalisation, la portion cylindrique mâle 31 présente une section circulaire. Autrement dit, la portion cylindrique mâle 31 est formée par un tube plein ou creux présentant une paroi périphérique qui s'étend périphériquement à 360° autour de la direction 32, quand celle-ci est placée au centre du tube.

La portion cylindrique mâle 31 est localisée à la périphérie du corps 23. Cette portion cylindrique mâle 31 est ménagée latéralement par rapport au logement 21, c'est-à-dire sur le côté du corps 23 et dans le prolongement du logement 21 selon un plan parallèle au plan de la face supérieure 24.

La portion cylindrique mâle 31 est reliée au corps 23 par deux bras respectivement référencés 33 et 34 et réalisés à chaque extrémité du corps 23, selon l'axe longitudinal 4. Une telle disposition permet de ménager une lumière 35 entre le corps 23 et la portion cylindrique mâle 31, une telle lumière 35 permettant de recevoir le moyen de fixation réalisé sur la partie secondaire, comme cela sera détaillé plus bas.

Un exemple de réalisation d'un moyen d'obturation 36 est représenté sur ces figures. Ce moyen d'obturation 36 a pour fonction de boucher ou fermer le dispositif de canalisation du fluide 7 du balai d'essuyage. Pour ce faire, la partie primaire 12 comprend au moins un téton 37 agencé pour faire face au conduit 8 ou 9. Ce téton est une excroissance tubulaire qui s'étend selon un axe parallèle à l'axe longitudinal 4 et confondu avec un axe dans lequel s'étend le conduit concerné. Le diamètre extérieur de ce téton 37 est légèrement supérieur au diamètre intérieur du conduit respectif. Comme le matériau constitutif des conduits est flexible, ces derniers se déforment pour s'emmancher sur le téton 37 et ainsi garantir une étanchéité au liquide. On notera enfin que l'extrémité libre du téton 37 présente un chanfrein qui facilite l'introduction du téton dans le conduit.

Le moyen d'obturation 36 peut prendre d'autres formes de réalisation pour autant qu'il assure l'étanchéité du dispositif de canalisation du liquide 7 aux extrémités du balai. A titre d'exemple, le dispositif d'obturation peut être formé par un appui plan du bout des conduites 8 ou 9 directement contre un flanc du corps 23.

La description ci-dessus de la partie primaire évoque des caractéristiques sur un premier côté de la partie primaire mais il va de soi qu'un second côté, opposé au premier côté par rapport au corps 23, reçoit des caractéristiques identiques. Autrement dit, la partie primaire 12 est partagé en deux par un plan de symétrie qui passe par l'axe longitudinal 4, ce qui permet de réaliser un moyen d'obturation 36 qui comprend deux tétons 37 et un moyen de fixation amovible 14 qui comprend deux portions cylindriques 31, chacune séparée du corps 23 par une lumière 35.

Les figures 7 à 9 montrent la partie secondaire 13 utilisée dans la première variante de l'embout d'extrémité 11. Une telle partie secondaire 13 forme un capuchon qui, lorsque le balai d'essuyage est placé dans un plan horizontal, recouvre la partie primaire. Autrement dit, cette partie secondaire 13 est placée au dessus et dans le prolongement de la partie primaire et présente la paroi périphérique 38 de forme conjuguée ou complémentaire à la forme du support 6, y compris le déflecteur 10. Cette paroi périphérique prend naissance sur chaque moyen de liaison amovible 14 ménagé sur la partie secondaire 13. La paroi périphérique 38 comprend une extrémité ouverte 39 dans laquelle s'étend le support du balai d'essuyage quand l'embout d'extrémité y est assemblé, et présente une paroi de bout 40 opposée à l'extrémité ouverte 39. Une telle organisation délimite un volume interne 41. On notera que la paroi de bout 40 présente une découpe qui coopère avec l'extrémité de la partie primaire.

Le moyen de fixation amovible 14 est réalisé par coopérations de formes ménagées à la fois sur la partie primaire et sur la partie secondaire.

En ce qui concerne la partie secondaire 13, ce moyen de fixation amovible 14 comprend une portion cylindrique femelle 42 qui prend par exemple la forme d'un arc de cercle. Cette portion cylindrique femelle 42 est ouverte sur sa longueur et évidée en son centre, de sorte à autoriser un positionnement de la portion cylindrique mâle 31 de la partie primaire 12 à l'intérieur de la portion cylindrique femelle 42 de la partie secondaire 13. Cette portion cylindrique femelle 42 est formée par un tube creux d'axe central, référencé 43, parallèle à la direction 32. Le diamètre intérieur de la portion cylindrique 42 est identique, aux tolérances de fabrication près, au diamètre externe de la portion cylindrique mâle 31 ménagée sur la partie primaire.

La portion cylindrique femelle 42 est ouverte en ce sens qu'elle présente une saignée, ou tranchée, qui s'étend parallèlement à l'axe central 43. Autrement dit, la portion cylindrique femelle 42 est formée par l'arc de cercle qui s'étend périphériquement entre 181° et 270°. Une telle disposition donne une flexibilité à la portion cylindrique femelle 42 afin d'autoriser l'introduction de la portion cylindrique mâle 31 de la partie primaire 12, tout en assurant une retenu de la portion cylindrique mâle 31 par la portion cylindrique femelle 42. Une fixation fiable mais amovible est ainsi réalisée entre la partie primaire et la partie secondaire 13.

Le moyen de verrouillage 44 est également visible sur les figures 8 et 9. Ce moyen de verrouillage 44 a pour fonction de bloquer l'embout d'extrémité par rapport au balai, particulièrement pour empêcher tous mouvements selon l'axe longitudinal 4, ci-après dénommés mouvements de translation.

Plus précisément, le moyen de verrouillage 44 est ménagé sur la partie secondaire 13 de manière à interdire les mouvements de translation entre la partie primaire et la vertèbre du balai. Le blocage de la lame racleuse est également réalisé par le moyen de verrouillage 44.

Le moyen de verrouillage 44 est issu de matière avec la partie secondaire 13. Autrement dit, la partie secondaire 13 et le moyen de verrouillage 44 sont issus d'un même moule et fabriqués à partir d'une matière plastique.

A titre d'exemple, le moyen de verrouillage prend la forme d'une excroissance 45 qui s'étend dans le volume interne 41 de la partie secondaire 13, notamment selon une direction perpendiculaire au plan de la face supérieure de la partie primaire.

Une telle excroissance 45 présente une section en « H » quand elle est coupée dans le plan de la face supérieure. Des nervures de renforts 46 sont ménagées à la base de l'excroissance, c'est-à-dire à sa naissance par rapport à la paroi périphérique 38.

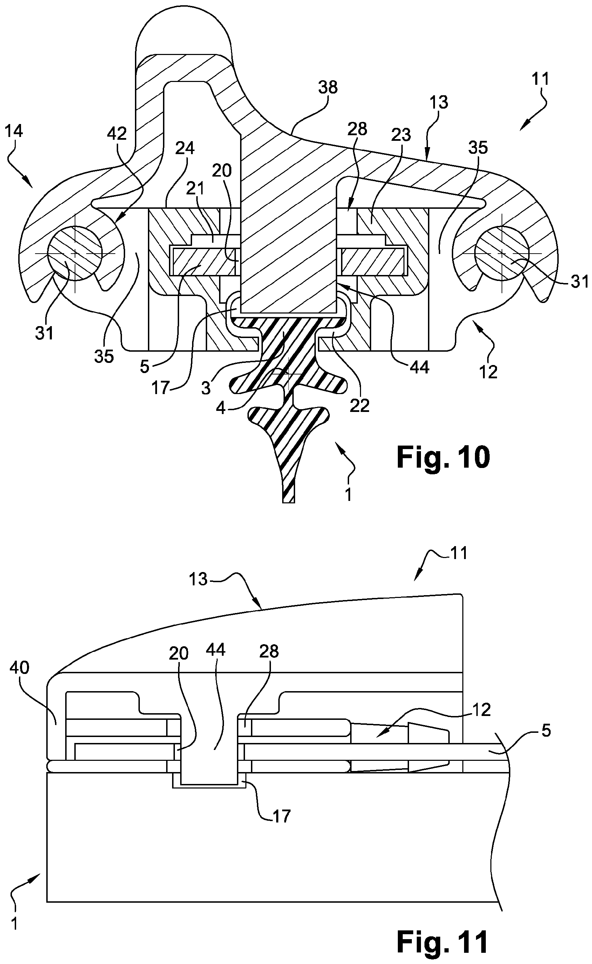

Les figures 10 et 11 montrent l'embout d'extrémité 11 et le balai d'essuyage qui le reçoit.

Sur la figure 10, la coupe est réalisée dans un plan orthogonal à l'axe longitudinal 4 alors que sur la figure 11, la coupe est réalisée dans un plan parallèle à cet axe longitudinal 4, ces deux coupes passant par le moyen de verrouillage 44.

La coopération entre la portion cylindrique mâle 31 de la partie primaire 12 avec la portion cylindrique femelle 42 issue de la partie secondaire 13 est particulièrement visible. On comprend ainsi que la portion cylindrique mâle 31 et la portion cylindrique femelle 42 sont des formes ménagées dans la partie primaire et dans la partie secondaire, ces formes réalisant le moyen de fixation amovible 14 par coopération. La lumière 35 pratiquée entre le corps 23 et la portion cylindrique mâle 31 permet à l'arc de cercle de la portion cylindrique femelle 42 de s'étendre autour de la portion cylindrique mâle 31, et ainsi réaliser la fixation amovible entre la partie primaire 12 et la partie secondaire 13.

La saignée de la portion cylindrique femelle 42 est réalisée dans le quart inférieur de cette portion cylindrique, c'est-à-dire le quart opposé à la paroi périphérique 38 de la partie secondaire 13.

Le trou 28 ménagé dans la partie primaire est également apparent et on voit clairement que celui-ci débute au niveau de la face supérieure 24, se poursuit dans le logement 21 qui reçoit la vertèbre 5, traverse la paroi intermédiaire 25 et se termine dans l'évidement 22 dans lequel se loge la lame d'essuyage 1.

Le moyen de verrouillage 44 est installé dans le trou 28 et vient au contact de l'orifice 20 réalisé dans la vertèbre 5 et de la découpe 17 réalisée dans la lame d'essuyage 1, l'extrémité libre du moyen de verrouillage 44 venant au contact du talon 3 au fond de la découpe 17.

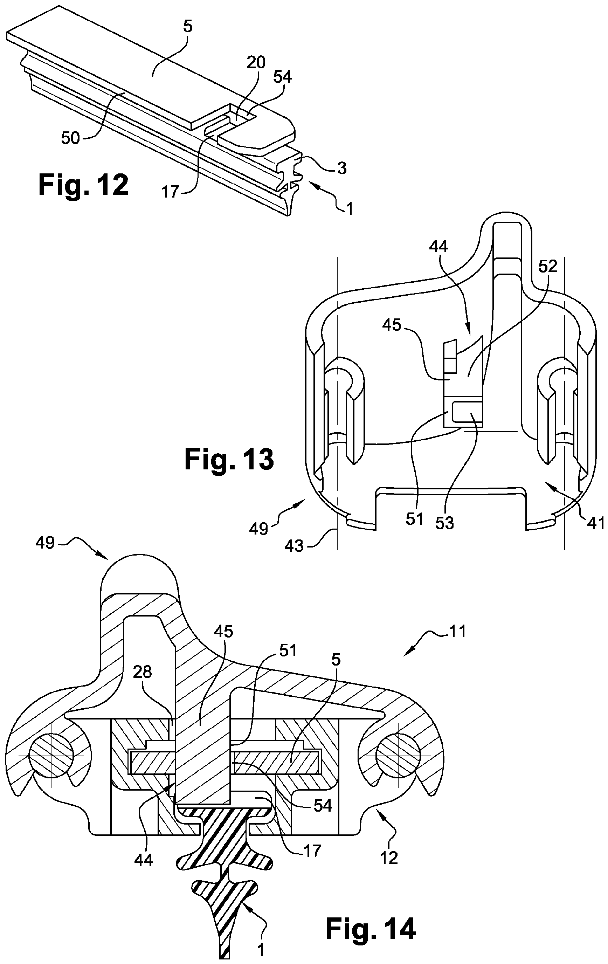

Les figures 12 à 14 montrent une deuxième variante de l'embout d'extrémité 11 qui fait l'emploi de la partie primaire 12 de la première variante et d'une partie secondaire 49 adaptée. On se reportera à la description ci-dessus pour connaître la réalisation de la partie primaire 12.

Dans cette seconde variante de l'embout d'extrémité 11, on constate sur la figure 12 que l'orifice 20 ménagé à l'extrémité de la vertèbre 5 est ouvert sur un côté longitudinal 50 de cette vertèbre 5. Le placement de cet orifice 20 est également modifié puisque sa profondeur, c'est-à-dire le bord 54 s'étend sensiblement dans un axe de symétrie longitudinal qui partage la vertèbre 5 en deux parties équivalentes. Une telle disposition est plus simple à réaliser que l'orifice 20 de périmètre carré de la première variante de réalisation. La lame d'essuyage 1 comprend également une découpe 17 réalisée dans son talon 3.

La figure 13 montre le volume interne 41. Cette partie secondaire 49 diffère de la partie secondaire 13 de la première variante par la section du moyen de verrouillage 44. En effet, l'excroissance 45 présente une section en forme de « U ». Une base 51 du « U » s'étend dans un plan parallèle à l'axe central 43 et deux branches 52 et 53 s'étendent perpendiculairement à la base 51.

Sur la figure 14, on voit la coopération entre le moyen de verrouillage 44, la vertèbre 5 et la lame d'essuyage 1. La base 51 vient au contact du bord 54, l'excroissance 45 s'étendant dans le trou 28 jusque dans la découpe 17 de la lame 1.

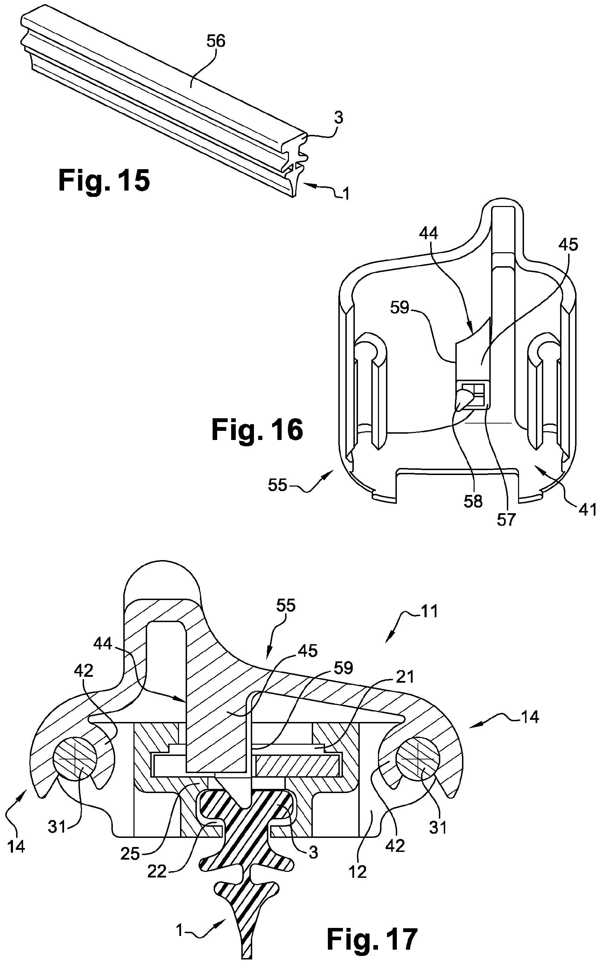

Les figures 15 à 17 montrent une troisième variante de l'embout d'extrémité 11 qui fait l'emploi de la partie primaire 12 de la première variante et d'une partie secondaire 55 modifiée. On se reportera à la description ci-dessus pour connaître la réalisation de la partie primaire 12.

Dans cette troisième variante de l'embout d'extrémité 11, la vertèbre 5 de la deuxième variante est utilisée. En revanche, on constate sur la figure 15 que le talon 3 de la lame d'essuyage 1 ne comporte pas de découpe. Autrement dit, une paroi supérieure 56 du talon 3 est uniforme, par exemple lisse.

La figure 16 montre le volume interne 41 de la partie secondaire 55. Cette partie secondaire 55 diffère de la partie secondaire 49 de la deuxième variante par la section du moyen de verrouillage 44, sa longueur et la forme de son extrémité libre. En effet, l'excroissance 45, formant le moyen de verrouillage 44, présente une section rectangulaire avec un renfort interne. Par ailleurs, le moyen de verrouillage 44 de cette troisième variante est agencé de sorte que son extrémité libre 57 soit dans le logement 21 ou dans l'épaisseur de la paroi intermédiaire 25. Ainsi, l'excroissance 45 ne pénètre pas dans l'évidement 22.

L'excroissance 45 comprend encore une extrémité libre 57 sur laquelle nait au moins une dent 58.

Dans cet exemple de réalisation, la dent 58 présente un profil conique d'axe confondu avec un flanc 59 constitutif de l'excroissance 45 On comprend ici que l'axe est décalé. Alternativement, la dent peut prendre une forme conique à axe central.

Selon cette troisième variante de réalisation, le blocage de la lame d'essuyage 1 intervient quand la dent 58 pénètre dans le talon 3 de la lame d'essuyage 1. La matière plastique de cette dent est plus dure que la matière constitutive de la lame d'essuyage 1 et cette dernière se déforme donc sous la pression de la dent 58.

Une telle pression intervient quand le moyen de fixation amovible 14 est mis en œuvre. En effet, la force nécessaire pour faire entrer la dent 58 dans le talon 3 résulte de la coopération entre la portion cylindrique mâle 31 de la partie primaire 12 avec la portion cylindrique femelle 42 de la partie secondaire 55.

Comme pour la première et la deuxième variante, l'excroissance 45 bloque tous mouvements de translation entre la partie primaire 12, la vertèbre 5 et la lame d'essuyage 1.

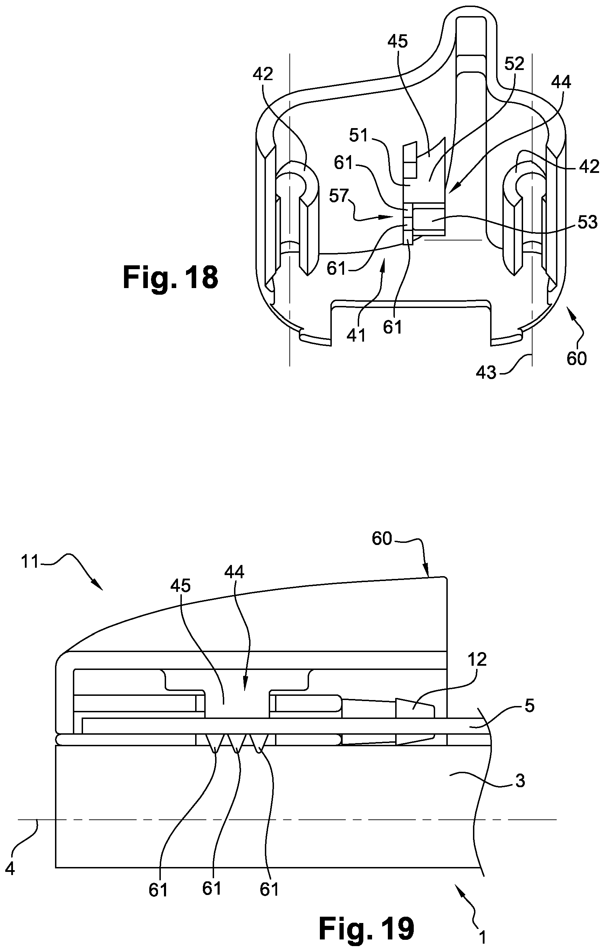

Les figures 18 et 19 montrent une quatrième variante de l'embout d'extrémité 11. Comme pour les variantes précédentes, la partie primaire 12 de la première variante est utilisée à l'identique alors qu'un partie secondaire 60 est modifiée. On se reportera à la description ci-dessus pour connaître la réalisation de la partie primaire 12.

Dans cette quatrième variante de l'embout d'extrémité 11, la vertèbre 5 de la deuxième variante et la lame d'essuyage 1 de la troisième variante de l'invention sont utilisées. Autrement dit, la vertèbre 5 comporte un orifice ouvert sur le côté alors que la lame d'essuyage 1 présente un talon 3 avec une paroi supérieure uniforme.

La figure 18 montre le volume interne 41. Cette partie secondaire 49 diffère de la partie secondaire 13 de la première variante par la section du moyen de verrouillage 44. En effet, l'excroissance 45 présente une section en forme de « U ». Une base 51 du « U » s'étend dans un plan parallèle à l'axe central 43 et deux branches 52 et 53 s'étendent perpendiculairement à la base 51. En d'autres termes, l'excroissance 45 de la quatrième variante présente une structure similaire à celle décrite en rapport avec la deuxième variante de réalisation de l'embout d'extrémité 11, à l'exception de sa longueur. En effet, l'extrémité libre 57 s'étend dans le logement 21 ou dans l'épaisseur de la paroi intermédiaire 25.

En revanche, l'extrémité libre 57 de l'excroissance 45 comporte une multiplicité de dents 61, chacune d'entre elles prenant la forme d'un triangle isocèle. Cette multiplicité de dents 61 est réalisée dans le prolongement de la base 51 si bien qu'elles sont alignées parallèlement à l'axe longitudinal 4 de la lame d'essuyage 1.

De manière similaire à la troisième variante de réalisation de l'embout d'extrémité 11, le blocage de la lame d'essuyage 1 intervient quand les dents 61 pénètrent dans le talon 3 de la lame d'essuyage 1. La matière plastique de ces dents est plus dure que la matière constitutive de la lame d'essuyage 1 et cette dernière se déforme donc sous la pression des dents 61.

Une telle pression intervient quand le moyen de fixation amovible est mis en œuvre. En effet, la force nécessaire pour faire entrer les dents 61 dans le talon 3 résulte de la coopération entre la portion cylindrique mâle de la partie primaire 12 avec la portion cylindrique femelle 42 de la partie secondaire 60.

Le remplacement d'une lame d'essuyage 1 d'un balai d'essuyage comprenant au moins un embout d'extrémité selon l'une quelconque des variantes exposées ci-dessus intervient de la manière suivante :
- extraction de la partie secondaire par rapport à la partie primaire par une traction sur la partie secondaire dans une direction perpendiculaire au plan qui passe par la face supérieure de la partie primaire,
- retrait par un mouvement de translation de la lame d'essuyage à remplacer, la partie primaire restant solidaire du balai d'essuyage,
- insertion d'une nouvelle lame d'essuyage par un mouvement de translation en l'enfilant dans l'évidement de la partie primaire,
- alignement de la lame d'essuyage sur une extrémité de la partie primaire,
- montage de la partie secondaire sur la partie primaire au moyen d'un clippage mis en oeuvre par le moyen de fixation amovible.

## Revendications

1. Embout d'extrémité (11) d'un balai d'essuyage, ledit balai comportant au moins une vertèbre (5), l'extrémité de la vertèbre comprenant un orifice (20) traversant de part en part ladite vertèbre (5), et une lame d'essuyage (1), l'embout d'extrémité (11) comprenant une partie primaire (12) et une partie secondaire (13, 49, 55, 60), la partie primaire (12) comprenant un logement (21) apte à recevoir la vertèbre (5) et un évidement (22) apte à recevoir la lame d'essuyage (1), ladite partie primaire (12) comprenant en outre un trou (28) qui débouche dans le logement (21) et dans l'évidement (22), ladite partie secondaire (13, 49, 55, 60) comprend un moyen de verrouillage (44) apte à bloquer l'embout d'extrémité (11) par rapport au balai, ledit moyen de verrouillage (44) s'étendant dans le trou (28), la partie primaire (12) et la partie secondaire (13, 49, 55, 60) étant reliées par un moyen de fixation amovible (14), dans lequel le logement (21) et l'évidement (22) sont distincts, dans lequel la partie primaire (12) est formée par un corps (23) traversé par le trou (28) et à la périphérie duquel est réalisé le moyen de fixation amovible (14), dans lequel le corps (23) présente une face supérieure (24) délimitant le logement (21), une paroi intermédiaire (25) qui délimite à la fois le logement (21) et l'évidement (22), dans lequel le trou (28) est pratiqué dans la face supérieure (24) et dans la paroi intermédiaire (25).

2. Embout d'extrémité selon l'une quelconque des revendications précédentes, dans lequel la partie secondaire (13, 49, 55, 60) couvre la partie primaire (12) quand le balai d'essuyage est placé dans un plan horizontal.

3. Embout d'extrémité selon l'une quelconque des revendications précédentes, dans lequel le moyen de fixation amovible (14) est réalisé par coopération de formes entre la partie primaire (12) et la partie secondaire (13, 49, 55, 60).

4. Embout d'extrémité selon l'une quelconque des revendications précédentes, dans lequel le moyen de fixation amovible (14) comprend au moins une portion cylindrique mâle (31) constitutive de la partie primaire (12) et une portion cylindrique femelle (42) ménagée sur la partie secondaire (13, 49, 55, 60).

5. Embout d'extrémité selon la revendication 4, dans lequel la portion cylindrique mâle (31) est formée par un tube présentant une paroi périphérique qui s'étend périphériquement à 360° alors que la portion cylindrique femelle (42) est formée par un arc de cercle qui s'étend périphériquement entre 181° et 270°.

6. Embout d'extrémité selon l'une quelconque des revendications précédentes, dans lequel le moyen de verrouillage (44) est agencé par rapport à la partie primaire (12) de manière à bloquer un mouvement de translation entre cette dernière et la vertèbre (5).

7. Embout d'extrémité selon l'une quelconque des revendications précédentes, dans lequel le moyen de verrouillage (44) est agencé par rapport à la partie primaire (12) de manière à bloquer un mouvement de translation entre cette dernière et la lame d'essuyage (1).

8. Embout d'extrémité selon l'une quelconque des revendications précédentes, dans lequel le moyen de verrouillage (44) est issu de matière avec la partie secondaire (13, 49, 55, 60) et forme une excroissance (45) qui s'étend dans un volume interne (41) de la partie secondaire (13, 49, 55, 60), ledit volume interne (41) étant délimité par une paroi périphérique (38) constitutive de la partie secondaire (13, 49, 55, 60).

9. Embout d'extrémité selon la revendication 8, dans lequel une extrémité libre (57) de l'excroissance (45) comprend au moins une dent (58, 61) apte à déformer la lame d'essuyage (1).

10. Embout d'extrémité selon l'une quelconque des revendications précédentes, comprenant un moyen d'obturation (36) apte à boucher un dispositif de canalisation d'un liquide (7) constitutif du balai.

11. Balai d'essuyage comprenant au moins une vertèbre (5), une lame d'essuyage (1) et un embout d'extrémité (11) selon l'une quelconque des revendications précédentes.

12. Balai d'essuyage selon la revendication 11, comprenant en outre au moins un dispositif de canalisation d'un liquide.

## Patentansprüche

1. Endstück (11) eines Scheibenwischers, wobei der Wischer mindestens Folgendes umfasst: eine Leiste (5), wobei das Ende der Leiste eine Öffnung (20) beinhaltet, die die Leiste (5) von der einen Seite zur anderen durchquert, und ein Wischblatt (1), wobei das Endstück (11) einen Primärteil (12) und einen Sekundärteil (13, 49, 55, 60) beinhaltet, wobei der Primärteil (12) einen Sitz (21), der in der Lage ist, die Leiste (5) aufzunehmen, und eine Aussparung (22), die in der Lage ist, das Wischblatt (1) aufzunehmen, beinhaltet, wobei der Primärteil (12) ferner ein Loch (28) beinhaltet, das in dem Sitz (21) und in der Aussparung (22) mündet, wobei der Sekundärteil (13, 49, 55, 60) ein Verriegelungsmittel (44) beinhaltet, das in der Lage ist, das Endstück (11) mit Bezug auf den Wischer zu blockieren, wobei sich das Verriegelungsmittel (44) in dem Loch (28) erstreckt, wobei der Primärteil (12) und der Sekundärteil (13, 49, 55, 60) durch ein Mittel (14) zur lösbaren Befestigung verbunden sind, wobei der Sitz (21) und die Aussparung (22) voneinander getrennt sind, wobei der Primärteil (12) durch einen Körper (23) gebildet ist, der von dem Loch (28) durchquert wird und an dessen Umfang das Mittel (14) zur lösbaren Befestigung realisiert ist, wobei der Körper (23) eine obere Seite (24), die den Sitz (21) abgrenzt, eine Zwischenwand (25), die sowohl den Sitz (21) als auch die Aussparung (22) abgrenzt, aufweist, wobei das Loch (28) in die obere Seite (24) und in die Zwischenwand (25) eingebracht ist.

2. Endstück nach einem der vorhergehenden Ansprüche, wobei der Sekundärteil (13, 49, 55, 60) den Primärteil (12) abdeckt, wenn der Scheibenwischer in einer horizontalen Ebene positioniert ist.

3. Endstück nach einem der vorhergehenden Ansprüche, wobei das Mittel (14) zur lösbaren Befestigung durch Formschluss zwischen dem Primärteil (12) und dem Sekundärteil (13, 49, 55, 60) realisiert ist.

4. Endstück nach einem der vorhergehenden Ansprüche, wobei das Mittel (14) zur lösbaren Befestigung mindestens einen zylindrischen Steckabschnitt (31), der Teil des Primärteils (12) ist, und einen zylindrischen Aufnahmeabschnitt (42), der an dem Sekundärteil (13, 49, 55, 60) bereitgestellt ist, beinhaltet.

5. Endstück nach Anspruch 4, wobei der zylindrische Steckabschnitt (31) durch ein Rohr gebildet ist, das eine umlaufende Wand, die sich um 360° umlaufend erstreckt, aufweist, während der zylindrische Aufnahmeabschnitt (42) durch einen Kreisbogen gebildet ist, der sich zwischen 181° und 270° umlaufend erstreckt.

6. Endstück nach einem der vorhergehenden Ansprüche, wobei das Verriegelungsmittel (44) mit Bezug auf den Primärteil (12) so angeordnet ist, dass es eine Translationsbewegung zwischen diesem und der Leiste (5) blockiert.

7. Endstück nach einem der vorhergehenden Ansprüche, wobei das Verriegelungsmittel (44) mit Bezug auf den Primärteil (12) so angeordnet ist, dass es eine Translationsbewegung zwischen diesem und dem Wischblatt (1) blockiert.

8. Endstück nach einem der vorhergehenden Ansprüche, wobei das Verriegelungsmittel (44) aus Material mit dem Sekundärteil (13, 49, 55, 60) geformt ist und einen Vorsprung (45) bildet, der sich in einem Innenraum (41) des Sekundärteils (13, 49, 55, 60) erstreckt, wobei der Innenraum (41) durch eine Umfangswand (38), die Teil des Sekundärteils (13, 49, 55, 60) ist, abgegrenzt wird.

9. Endstück nach Anspruch 8, wobei ein freies Ende (57) des Vorsprungs (45) mindestens einen Zahn (58, 61) beinhaltet, der in der Lage ist, das Wischblatt (1) zu verformen.

10. Endstück nach einem der vorhergehenden Ansprüche, das ein Abdichtungsmittel (36) beinhaltet, das in der Lage ist, eine Vorrichtung zum Leiten einer Flüssigkeit (7), die Teil des Wischers ist, zu verschließen.

11. Scheibenwischer, der mindestens eine Leiste (5), ein Wischblatt (1) und ein Endstück (11) nach einem der vorhergehenden Ansprüche beinhaltet.

12. Scheibenwischer nach Anspruch 11, der ferner mindestens eine Vorrichtung zum Leiten einer Flüssigkeit beinhaltet.

## Claims

1. An end fitting (11) of a wiper, said wiper having at least one vertebra (5) and a wiper blade (1), the end fitting (11) comprising a primary part (12) and a secondary part (13, 49, 55, 60), the primary part (12) comprising a housing (21) that is able to receive the vertebra (5) and a recess (22) that is able to receive the wiper blade (1), said primary part (12) also comprising a hole (28) which opens into the housing (21) and into the recess (22), said secondary part (13, 49, 55, 60) comprising a locking means (44) that is able to immobilize the end fitting (11) with respect to the wiper, said locking means (44) extending into the hole (28), the primary part (12) and the secondary part (13, 49, 55, 60) being connected by a removable fastening means (14), wherein the housing (21) and the recess (22) are distinct, wherein the primary part (12) is formed by a body (23) through which the hole (28) passes and at the periphery of which the removable fastening means (14) is formed, wherein the body (23) has an upper face (24) delimiting the housing (21), an intermediate wall (25) which delimits both the housing (21) and the recess (22), wherein the hole (28) is made in the upper face (24) and in the intermediate wall (25).

2. The end fitting as claimed in any one of the preceding claims, wherein the secondary part (13, 49, 55, 60) covers the primary part (12) when the wiper is placed in a horizontal plane.

3. The end fitting as claimed in any one of the preceding claims, wherein the removable fastening means (14) is produced by cooperating shapes between the primary part (12) and the secondary part (13, 49, 55, 60).

4. The end fitting as claimed in any one of the preceding claims, wherein the removable fastening means (14) comprises at least one constituent male cylindrical portion (31) of the primary part (12) and a female cylindrical portion (42) formed on the secondary part (13, 49, 55, 60).

5. The end fitting according to claim 4, wherein the male cylindrical portion (31) is formed by a tube having a peripheral wall which extends peripherally through 360°, while the female cylindrical portion (42) is formed by a circular arc which extends peripherally between 181° and 270°.

6. The end fitting as claimed in any one of the preceding claims, wherein the locking means (44) is arranged with respect to the primary part (12) so as to prevent a movement in translation between the latter and the vertebra (5).

7. The end fitting as claimed in any one of the preceding claims, wherein the locking means (44) is arranged with respect to the primary part (12) so as to prevent a movement in translation between the latter and the wiper blade (1).

8. The end fitting as claimed in any one of the preceding claims, wherein the locking means (44) is produced in one piece with the secondary part (13, 49, 55, 60) and forms a protuberance (45) which extends into an internal volume (41) of the secondary part (13, 49, 55, 60), said internal volume (41) being delimited by a constituent peripheral wall (38) of the secondary part (13, 49, 55, 60).

9. The end fitting as claimed in claim 8, wherein a free end (57) of the protuberance (45) comprises at least one tooth (58, 61) that is able to deform the wiper blade (1).

10. The end fitting as claimed in any one of the preceding claims, comprising a blocking means (36) that is able to plug a constituent liquid channeling device (7) of the wiper.

11. A wiper comprising at least one vertebra (5), a wiper blade (1) and an end fitting (11) as claimed in any one of the preceding claims.

12. The wiper as claimed in claim 11, furthermore comprising at least one liquid channeling device.
